# EUROPEAN PATENT APPLICATION

(11) **EP 0 773 535 A1**
(43) Date of publication of application: **14.05.1997**
(21) Application number: 96117977.7
(22) Date of filing: 08.11.1996
(51) Int. Cl.: G11B 5/702

(54) **Magnetic recording medium**

(30) Priority: 09.11.1995 JP 316138/95; 28.12.1995 JP 353505/95
(71) Applicant: VICTOR COMPANY OF JAPAN, LTD., Yokohama-Shi, Kanagawa-Ken (JP)
(72) Inventor: Tsutomu, Yashiro, Mito-shi, Ibaraki-ken (JP); Takumu, Tada, Konan-ku, Yokohama-shi, Kanagawa-ken (JP); Toshimitsu, Saitou, Mito-shi, Ibaraki-ken (JP); Takayuki, Deno, Mito-shi, Ibaraki-ken (JP)
(74) Representative: Wagner, Karl H., Dipl.-Ing.

(57) **Abstract**

A magnetic recording medium has a substrate and a magnetic layer on the substrate. The magnetic layer contains a ferromagnetic pigment of fine alloy particles mainly comprised of iron, and a binder. The magnetic medium includes the ferromagnetic pigment having an average long axis length of not more than 100 nm and a value of BET of not less than 50 m²/g and a magnetization of not less than 120 emu/g and the binder made of a resin containing tertiary amino group represented by a formula (1) as a constitutional unit, 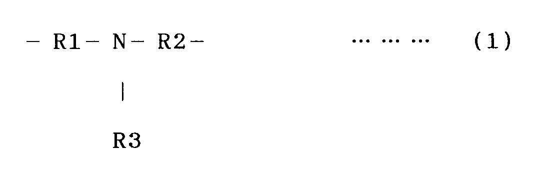 wherein R1, R2 and R3 are selected from groups of (a) saturated aliphatics and derivatives thereof, (b) unsaturated aliphatics and derivatives thereof, (c) C3-C7 saturated cyclic compounds and derivatives thereof, (d) C3-C7 unsaturated cyclic compounds and derivatives thereof, and (e) aromatics and derivatives thereof.

## Description

### BACKGROUND OF THE INVENTION

### Field of the Invention:

This invention relates to improvements of coating type magnetic recording mediums such as a magnetic tape and a floppy disc, and, in particular, relates to magnetic recording mediums capable of high density recording and having excellent preservability (corrosion resistance) for an extended period of time.

### Description of the Related Arts:

Magnetic recording mediums are used for storing and reserving information such as images and data and are made full use of as one of the most effective information storing mediums.

Recently, an amount of accumulated information has grown enormously, so that it is an important subject how to increase a recording density of a given recording medium.

As a measure of increasing the recording density, there has been tried to employ iron metallic fine particles having enhanced magnetic characteristics as a ferromagnetic pigment instead of a conventional iron oxide pigment for the magnetic recording medium.

However, there arises a problem of degradation of the magnetic characteristic in the metal magnetic tape employing the metallic fine particles caused by oxidation of the magnetic pigment after an extended preservation thereof, which has hardly occurred in the magnetic tape employing conventional iron oxide pigments.

As a method to resolve this problem, there has been developed a technology to form oxidized layers on the surfaces of ferromagnetic particles, however, it is hard to say that the effect of the corrosion resistance of the oxidized layers is sufficient.

Further, from a standpoint of magnetic characteristics of the magnetic pigment, it is not beneficial to form the oxidized layers on the surfaces of the particles thick enough to prevent the oxidation effectively because a larger thickness of the oxidized layers of particles reduces excellent magnetic properties which the magnetic pigment inherently has.

Thus, at present, the thickness of the oxidized layers thereof is controlled so as to satisfy to some degree both factors of the corrosion resistance and an intensity of magnetization of the magnetic pigment.

Accordingly, when the magnetic characteristics are given priority to an amount of the magnetization of pigment, the corrosion resistance of the magnetic pigment is apt to be sacrificed.

This is one of reasons why the effect of the corrosion resistance of the magnetic pigment formed with the oxidized layers is not sufficient.

For instance, in order to realize a high density recording, it is important to increase a magnetic power defined as a product of a magnetization and a coercive force of the magnetic pigment and to reduce a magnetic particle size into smaller one.

Particularly, the reduction of the magnetic particle size is important to improve both a S/N characteristic of the magnetic medium and a packing density of the magnetic pigment in a magnetic layer of the magnetic medium.

However, generally, a reduction of the magnetic particle size relatively increases a content rate of the oxidized layers to a total amount of the magnetic pigment, resulting in a reduction of the intensity of magnetization of the magnetic pigment.

Accordingly, at the expense of the corrosion resistance, the reduction of the magnetization is usually prevented by decreasing the content rate of the oxidized layers contained in the magnetic pigment.

Generally, magnetic pigments are classified into three generations of about 200 nm of an average long axis length, 150 to 100 nm thereof and not more than 100 nm thereof.

When the magnetization of each of the three generations is assumed to be a certain value and particles of each of them are assumed to have the same shape, the thicknesses of the oxidized layers regarding the three generations are able to be calculated.

When magnetic particles of a magnetic pigment are reduced into fine ones by maintaining the total magnetization of the pigment, a thickness of the oxidized layers formed on the magnetic particles thereof becomes very small at the expense of the corrosion resistance of the magnetic pigment.

In order to realize a high density recording, the magnetic pigment having an average long axis length of not more than 100 nm is going to be employed dominantly. The thickness of the oxidized layers of the magnetic pigment having an average long axis of less than 100 nm has nearly half value compared with that of an average long axis length of 200 nm.

In this situation, some efforts have been made to prevent the magnetic particles from suffering the reduction of magnetization caused by the oxidized layer. For instance, one is to smooth the surface of magnetic particles, and another is to enhance a magnetization of a core of them. However, those efforts have not completely realized the thickness of the oxidized layer to protect enough the corrosion of the magnetic particles.

Thus, the smaller the average long axis length of magnetic particles becomes, the smaller thickness of the oxidized layers has to be formed on the magnetic particles.

As oxidized layers used at present, there are alumina, silica or a combination thereof. In the magnetic pigment formed with the oxidized layers, a total content rate of both Al and Si to an overall magnetic pigment in weight % is less than 3 % in most cases at present.

As seen from the above description, in the prior art, when an improvement of the recording density is given priority to, the corrosion resistance of the magnetic pigment is apt to be sacrificed.

Further, in the magnetic recording mediums, there are improvements of magnetic characteristics to realize a high density magnetic recording.

Specifically, improvements of saturation magnetic flux density Bm and coercive force Hc are advanced by employing a metal ferromagnetic pigment made of fine iron metal particles having high magnetic characteristics or made of fine iron alloy particles mainly composed of iron for the magnetic layer of the medium.

Further, in order to prevent a reduction of an output level due to a head-to-medium spacing loss on recording and reproducing, a smoothness of the surface of the medium is required.

It is well known that upon recording and reproducing a short wave length signal such as a digital signal on a magnetic layer of the medium, a reduction of a thickness of the magnetic layer effectively increases an output level in reproducing. Further, the reduction of the thickness is very effective to improve an overwrite characteristic, which is defined as a characteristic to overwrite the recording signal on a pre-recorded medium without erasing the prerecorded signals.

For the above reasons, the thickness of the magnetic layer is being reduced to be 0.1 to 0.3 µm.

The metal magnetic pigment has a high magnetic performance, however, it has an easily oxidized characteristic, which brings a problem of preservability (corrosion resistance) for an prolonged term as mentioned in the foregoing.

As a countermeasure thereto, in the magnetic medium having a magnetic layer of 0.1 to 0.3 µm, the magnetic particles of the magnetic pigment are formed with coated layers to improve the corrosion resistance by surface treating with inorganic compounds. However, the coated layers affects the saturation magnetization σs of the magnetic pigment. Thus, there is a problem that when an amount of the coated layer is increased to enhance the corrosion resistance of the medium, the saturation magnetization as decreases, and when the amount of the coated layers is decreased to maintain the saturation magnetization σs, the corrosion resistance decreases as mentioned in the foregoing.

### SUMMARY OF THE INVENTION

Accordingly, a general object of the present invention is to provide magnetic recording mediums in which the above disadvantages have been eliminated.

Further, a general object of the present invention is to provide magnetic recording mediums which employ metal magnetic pigment in their magnetic layer, having excellent preservability without sacrificing excellent magnetic properties which the metal magnetic pigments inherently have.

A more specific object of the present invention is to provide a magnetic recording medium having a substrate and a magnetic layer on the substrate, the magnetic layer containing a ferromagnetic pigment of fine iron particles or fine alloy particles mainly comprised of iron, and a binder, the magnetic medium comprising: the ferromagnetic pigment having an average long axis length of not more than 100 nm and a value of BET of not less than 50 m²/g and a magnetization of not less than 120 emu/g; and the binder made of a resin containing tertiary amino group represented by a formula (1) as a constitutional unit, 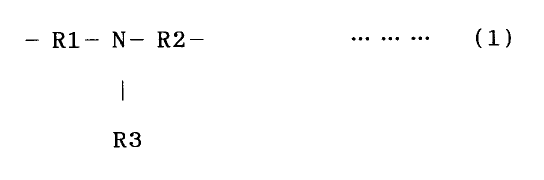 wherein R1, R2 and R3 are respectively selected from groups of: (a) saturated aliphatics and derivatives thereof, (b) unsaturated aliphatics and derivatives thereof, (c) C3-C7 saturated cyclic compounds and derivatives thereof, (d) C3-C7 unsaturated cyclic compounds and derivatives thereof, and (e) aromatics and derivatives thereof.

Another specific object of the present invention is to provide a magnetic recording medium having a substrate and a magnetic layer on the substrate, the magnetic layer containing a ferromagnetic pigment of fine alloy particles mainly comprised of iron, and a binder, the magnetic medium comprising: the ferromagnetic pigment being surface-treated by inorganic compounds and containing Si of a content rate of not more than 1.1 weight % to an total amount of the magnetic pigment; and the binder made of a resin containing tertiary amino group represented by a formula (1) as a constitutional unit, 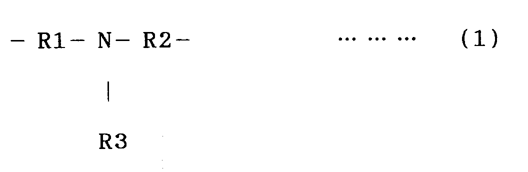 wherein R1, R2 and R3 are selected from groups of: (a) saturated aliphatics and derivatives thereof, (b) unsaturated aliphatics and derivatives thereof, (c) C3-C7 saturated cyclic compounds and derivatives thereof, (d) C3-C7 unsaturated cyclic compounds and derivatives thereof, and (e) aromatics and derivatives thereof.

Another specific object of the present invention is to provide a magnetic recording medium having a substrate and a magnetic layer on the substrate, the magnetic layer containing a ferromagnetic pigment of fine alloy particles mainly comprised of iron, and a binder, the ferromagnetic pigment having a saturation magnetization σs of 160 to 200 emu/g, the magnetic layer having a thickness of 0.1 to 0.3 µm, wherein the binder is made of polyurethane resin containing tertiary amino group represented by a formula (2) as a constitutional unit, 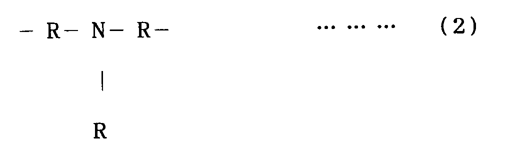 wherein R is one selected from a group of hydrogen and hydrogen carbide group.

Another specific object of the present invention is to provide a magnetic recording medium having a substrate and a magnetic layer on the substrate, the magnetic layer containing a ferromagnetic pigment of fine alloy particles mainly comprised of iron, and a binder, the ferromagnetic pigment having a saturation magnetization σs of 160 to 200 emu/g, the magnetic layer having a thickness of 0.1 to 0.3 µm, wherein the binder is made of vinyl chloride type resin containing tertiary amino group represented by a formula (2) as a constitutional unit, 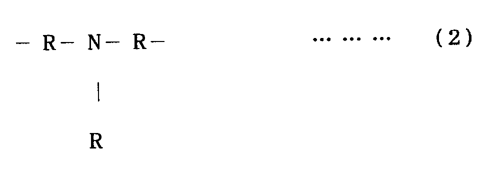 wherein R is one selected from a group of hydrogen and hydrogen carbide group.

Another specific object of the present invention is to provide a magnetic recording medium having a substrate and a magnetic layer on the substrate, the magnetic layer containing a ferromagnetic pigment of fine alloy particles mainly comprised of iron, and a binder, the ferromagnetic pigment having a saturation magnetization σs of 160 to 200 emu/g, the magnetic layer having a thickness of 0.1 to 0.3 µm, wherein the binder is made of both vinyl chloride type resin and polyurethane resin each containing tertiary amino group represented by a formula (2) as a constitutional unit, 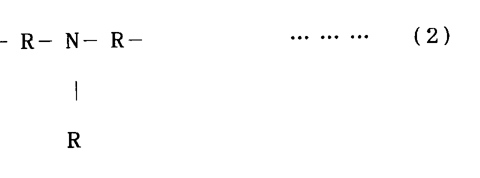 wherein R is one selected from a group of hydrogen and hydrogen carbide group.

Other objects and further features of the present invention will be apparent from the following detailed description.

### DETAILED DESCRIPTION OF THE PREFERRED EMBODIMENTS

First, the description is now given of first and second embodiments of magnetic recording mediums of the present invention.

The magnetic recording medium of the present invention generally comprises a substrate such as a base film and a magnetic layer formed on the substrate. The magnetic layer includes a magnetic pigment and a binder for binding the magnetic pigment.

The inventors of the present invention studied hard to improve a corrosion resistance of a magnetic pigment having an average long axis length of not more than 100 nm by giving the corrosion resistance to a binder for binding the magnetic pigment.

As a result, they have developed a magnetic recording medium having an excellent corrosion resistance without sacrificing the excellent magnetic properties which the metal magnetic pigment inherently has, by combining magnetic pigments and binders as mentioned hereinafter.

Specifically, the magnetic medium comprises a substrate and a magnetic layer on the substrate. The magnetic layer contains a ferromagnetic pigment of fine metal particles mainly comprised of iron and a binder. The ferromagnetic pigment has an average long axis length of not more than 100 nm and a value of BET of not less than 50 m²/g and a magnetization of not less than 120 emu/g. The binder has a resin of tertiary amine represented by a formula (1) as a constitutional unit. 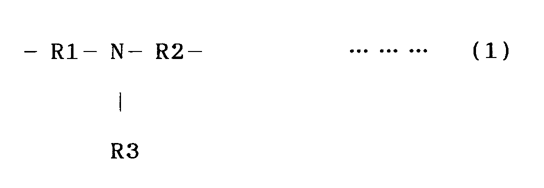 wherein R1, R2 and R3 are:
- saturated aliphatics having straight chains or branchings and derivatives thereof,
- unsaturated aliphatics having straight chains or branchings and derivatives thereof,
- C3-C7 saturated cyclic compounds and derivatives thereof,
- C3-C7 unsaturated cyclic compounds and derivatives thereof, and
- aromatics or derivatives thereof.

Thereby, the inventors developed the magnetic medium having an excellent corrosion resistance without sacrificing the magnetic characteristics of the ferromagnetic pigment. (a first embodiment)

Further, the present inventors studied to improve the corrosion resistance by contemplating materials of surface layers of the magnetic pigment.

As a result, the inventor developed the magnetic medium which comprises a substrate and a magnetic layer on the substrate, and the magnetic layer contains a ferromagnetic pigment of metal fine particles mainly comprised of iron and a binder. The ferromagnetic pigment is surface-treated with silicon compounds, and a weight ratio of an amount of silicon contained to a total amount of the ferromagnetic pigment is not more than 1.1 weight %. The binder has a resin of tertiary amine represented by the formula (1) as a constitutional unit. Thereby, the magnetic medium has an excellent corrosion resistance without sacrificing the magnetic characteristics of the ferromagnetic pigment. (a second embodiment)

In the above ferromagnetic pigment surface-treated with silicon compounds, it is difficult to detect only the silicon surface-treated by separating the silicon originally contained in the ferromagnetic pigment. Thus, in the second embodiment, as an amount of silicon surface-treated, a weight ratio of silicon to a total amount of the ferromagnetic pigment surface-treated with the silicon compounds in element constitution is represented.

Further, the above tertiary amine may be contained in either straight chain or side chain of the resin, however, it is easier to cause the tertiary amine to be contained in the straight chain.

### [First embodiment]

Description is given of embodiments and comparatives of the first embodiment.

There are shown in Table 1 magnetic properties and corrosion resistance of the magnetic pigments which are coated with oxidized layers by being surface-treated, used in the embodiments and comparatives.

**Table 1**

| Magnetic pigment | Ave. long axis length (nm) | BET (m²/g) | Initial Magnetiz. (emu/g) | Coercive force (Oe) | ∗ Magnetiz. after 5 hours |
|---|---|---|---|---|---|
| A | 200 | 45 | 109 | 1480 | 0.80 |
| B | 110 | 48 | 118 | 1860 | 0.78 |
| C | 80 | 52 | 124 | 2020 | 0.65 |

| | | | | | |
|---|---|---|---|---|---|
| ∗ The magnetic pigments were left for 5 hours in an atmosphere of 60 °C and 90 % RH (relative humidity). Each of the values of the magnetization is represented by a relative value referred to the initial magnetization value. | | | | | |

As seen from Table 1, the magnetization after 5 hours of the magnetic pigment "C" having an average long axis length of not more than 100 nm is degraded, compared with those of the magnetic pigments "A" and "B". In other words, when the average long axis length and the value of BET of the ferromagnetic pigment are made to be not more than 100 nm and not less than 50 m²/g, respectively, maintaining the initial magnetization to be not less than 120 emu/g, the corrosion resistance of the magnetic pigment itself is greatly reduced as seen from the comparison with the magnetic pigment "B" having the average long axis of 110 nm.

The reason that both the magnetic pigments "A" and "B" show approximately the same magnetization after 5 hours, is that the magnetic pigment "B" is performed with a surface smoothness and an enhancement of a magnetization of a core portion with respect to the respective magnetic particles as explained in the Description of the Related Arts (the magnetic pigment "C" is also performed with the same treatments as well).

### [Preparation of binders]

As a polymer containing tertiary amine as a constitutional unit, polyurethane was synthesized by using various kinds of polydiol, diol containing tertiary amine group and isocyanate. In the case of introducing a reactive monomer into polyurethane, it is desirable to be diol, and aliphatic amine such as N-butyldiethanol amine and aromatic amine such as N-phenyldiethanol amine are employed. Further it is possible to employ 2,5-bis (N-2-hydroxyethyl-N-methylamino)-1,4-benzoquinone which contains tertiary amino group of 2 equivalent in an reactive monomer. As soft segments usually used in polyurethane, there are polyamine and polyol, however, polydiol is frequently used. As polydiol, ethyl type diol such as polyisopropylene diol and polybutylene diol, and ester type diol such as polybutylene adipate and polycaprolactone diol.

As isocyanate, diisocyanate such as tolyelne-2,4-diisocyanate (referred to as TDI hereinafter) metylendi-p-phenyldiisocyanate (referred to as MDI) is widely used.

The more content rate of the tertiary amine group to the polymer (a content rate of the tertiary amine group to the resin) becomes, the more desirable to the improvement of the corrosion resistance. However, the excessive tertiary amino group causes the decrease of dispersibility of the polymer, resulting in a degradation of mechanical characteristic as the binder. Accordingly, the content rate of the tertiary amino group to the polymer is preferably 10 to 40 weight %.

Example of a synthesis of resin for the binder introduced with the tertiary amino group is given as follows:

### (a) Synthesis example 1:

### Polyurethane obtained by using aliphatic amine.

Poly (1,4-butylene adipate)(number average molecular weight: 1000) of 100 g (0.1 mol) and N-butyldiethanol amine of 40.3 g (0.25 mol) were introduced to dissolve in N,N-dimethyl formaldehyde amid (referred to as DMF) of 200 ml in a separable flask in an atmosphere of nitrogen. Then, TDI of 60.9 g (0.35 mol) was added therein to dissolve and was reacted by being stirred. After 40 minutes from the reaction, dimethylamino pyridine of 0.5 g was further added as a catalyst to react for 60 minutes. After the reaction was over, the reacted liquid was diluted by DMF so that the reacted liquid had fluidity, and it was transferred to a plate. After non-reacted material was washed away by methanol, and dried, the aimed polyurethane of 180 g was obtained. Weight average molecular weight and number average molecular weight determined by gel permeation chromatography (referred to as GPC) were respectively 12000 and 6000.

### (b) Synthesis example 2:

### Polyurethane obtained by using aromatic amine.

Poly (1,4-butylene adipate)(number average molecular weight: 1000) of 100 g (0.1 mol) and N-phenyldiethanol amine of 38.5 g (0.21 mol) were introduced to dissolve in DMF of 200 ml in a separable flask in an atmosphere of nitrogen. Then, TDI of 54.4 g (0.31 mol) was added thereto to dissolve and was reacted by being stirred. The successive processes were the same as those of the synthesis example 1. As a result, polyurethane of 170 g was obtained. Weight average molecular weight and number average molecular weight determined by GPC were respectively 32000 and 11000.

### (c) Synthesis example 3:

### Polyurethane obtained by using aminoquinone.

Polycaprolactone (number average molecular weight: 1000) of 100 g (0.1 mol) and 2,5-bis (N-2-)hydroxyethyl-n-methylamino)-1,4-benzoquinone of 33.0 g (0.13 mol) were introduced to dissolve in DMF of 200 ml in a separable flask in an atmosphere of nitrogen. The successive processes were the same as those of the synthesis example 1. As a result, polyurethane of 120 g was obtained.

In the embodiments, the synthesis examples 1 and 2 were employed. As the comparatives, commercially available polyurethane and polyvinyl chloride having no tertiary amino group were further prepared as the binder.

Respective magnetic paints were prepared by sufficiently dispersing the magnetic pigments shown in Table 1 and the abovementioned binders into an equally combined liquid of methyl-ethyl-ketone, toluene and cyclohexsanone.

Compositions of the magnetic paint are as follows.

| | |
|---|---|
| magnetic pigment | 100 weight parts |
| binder | 20 weight parts |
| additives | 2 weight parts |
| combined liquid | 380 weight parts |

Desk sand mill was used to disperse the mixture. The additives contain abrasives and lubricants.

After the respective magnetic paints were coated on a PET film (polyethylene telephthalate film) and the PET film was cut into sample pieces of a square of 6x6 mm. The sample pieces were preserved in an atmosphere of 60 °C/90 RH. Changed values of a magnetization after a week and 4 weeks were respectively obtained by using a VSM (vibration sample magnetometer). The changed values are normalized by the initial magnetization thereof.

There are shown the compositions and the changed values of the embodiments and the comparatives in Table 2 and Table 3, respectively.

**Table 2**

| Embod. | Magnetic pigment | Main binder | Satu. magnetiz. Ms(t)/∗Ms(0) | |
|---|---|---|---|---|
| | | | after 1 week | after 4 weeks |
| 1 | C | aliphatic | 0.978 | 0.915 |
| 2 | C | aromatic | 0.972 | 0.887 |

| | | | | |
|---|---|---|---|---|
| ∗Ms(0): initial saturation magnetization | | | | |

| Comp. | Magnetic pigment | Main binder | Satu. magnetiz. Ms(t)/∗Ms(0) | |
|---|---|---|---|---|
| | | | after 1 week | after 4 weeks |
| 1 | A | aliphatic | 0.988 | 0.923 |
| 2 | A | aromatic | 0.987 | 0.885 |
| 3 | B | aliphatic | 0.955 | 0.875 |
| 4 | B | aromatic | 0.951 | 0.868 |
| 5 | A | REF-01 | 0.978 | 0.901 |
| 6 | A | REF-02 | 0.988 | 0.915 |
| 7 | B | REF-01 | 0.941 | 0.884 |
| 8 | B | REF-02 | 0.937 | 0.856 |
| 9 | C | REF-01 | 0.850 | 0.742 |
| 10 | C | REF-02 | 0.842 | 0.734 |

| | | | | |
|---|---|---|---|---|
| ∗Ms(0): Initial saturation magnetization | | | | |

In Tables 2 and 3, "Main binder" means that the designated material is contained at a rate of not less than 50 % to a total resin. In the column of "Main binder", "aliphatic" designates the polyurethane obtained by using aliphatic amine shown in the synthesis example 1, and "aromatic" the polyurethane obtained by using aromatic amine shown in the synthesis example 2. Further, "REF-01" designates commercially available polyurethane containing no tertiary amine, and "REF-02" commercially available polyvinyl chloride containing no tertiary amine.

As seen from comparison between the comparatives 1-4 and the comparatives 5-8 in Table 3, when employing the magnetic pigments A and B having an average long axis length of more than 100 nm and having a value of BET of less than 50 m²/g, an improvement of corrosion resistance is scarcely obtained by introducing the tertiary amine to the binder.

On the contrary, as seen from comparison between the embodiments 1 and 2 and the comparatives 9 and 10, when employing the magnetic pigment C having an average long axis length of not more than 100 nm and having a value of BET of not less than 50 m², an improvement of corrosion resistance is effectively obtained by introducing the tertiary amine to the binder.

In the embodiments 1 and 2, the corrosion resistance is improved to more than an extent as much as ones employing the magnetic pigments having an average long axis length of more than 100 nm. Further, the binder employing the aliphatic amine shows more effective corrosion resistance than the binder employing the aromatic amine.

### [Second embodiment]

Description is given of embodiments and comparatives regarding the second embodiment of the present invention, wherein the magnetic pigments are surface-treated with silicon compounds.

There are shown in Table 4 results of element analysis by an X-ray microanalyzer regarding metal magnetic pigments used in the embodiments and comparatives, wherein an average long axis length of respective alloy pigments is about 100 nm.

**Table 4**

| Elements of Magnetic pgmnt. | PIG-01 (wt%) | PIG-2 (wt%) | PIG-03 (wt%) | PIG-05 (wt%) |
|---|---|---|---|---|
| Fe | 66.6 | 57.2 | 50.2 | 52.4 |
| Co | 0 | 8.8 | 9.1 | 8.6 |
| Ni | 0 | 0 | 0 | 1.1 |
| O | 31.0 | 31.1 | 29.9 | 33.6 |
| Nd | 0 | 0 | 9.2 | 0 |
| Al | 2.0 | 0 | 1.7 | 0.7 |
| Si | 0.2 | 2.5 | 1.1 | 1.9 |
| others | 0.2 | 0.4 | 0.8 | 0.7 |

In Table 4, PIG-01, PIG-03 and PIG-05 designate magnetic pigments having coated layers made of silicon compound and aluminum compound, and PIG-02 designates a magnetic pigment having a coated layer made of only silicon compound.

A content rate (wt%) of Si is defined as a content rate of Si to a corresponding magnetic pigment containing Si of the coated layer. (That is true in Al.)

The content rates of Si and Al of the coated layers are controlled in the surface treatment process.

Specifically, upon surface-treating geothite with a water solution containing Al ions and Si ions, a density of Al and Si in the water solution is controlled, and a desired magnetic pigment is obtained through drying, crushing and reducing processes.

As the binders, the polyurethane obtained by using aliphatic amine shown in the synthesis example 1, the polyurethane obtained by using aromatic amine shown in the synthesis example 2, and the commercially available polyurethane (REF-01) were employed.

The production method of the magnetic paints and the measuring method of changed values of the saturation magnetization are the same as those of the first embodiment.

There are shown in Tables 5 and 6 compositions of magnetic pigments and binders used and changed values of the saturation magnetization with respect to the embodiments 1 to 4 and the comparatives 1 to 10, respectively. The representation of the binders is the same as that of the first embodiment.

| Embod. | Magnetic pigment | Main binder | Satu. magnetiz. Ms(t)/∗Ms(0) | |
|---|---|---|---|---|
| | | | after 2 hours | after 24 hours |
| 1 | PIG-01 | aliphatic | 0.998 | 0.995 |
| 2 | PIG-01 | aromatic | 0.995 | 0.757 |
| 3 | PIG-03 | aliphatic | 0.988 | 0.972 |
| 4 | PIG-03 | aromatic | 0.945 | 0.545 |

| | | | | |
|---|---|---|---|---|
| ∗Ms(0): initial saturation magnetization | | | | |

| Comp. | Magnetic pigment | Main binder | Satu. magnetiz. Ms(t)/∗Ms(0) | |
|---|---|---|---|---|
| | | | after 1 week | after 4 weeks |
| 1 | PIG-02 | REF-01 | 0.451 | 0.002 |
| 2 | PIG-02 | REF-02 | 0.195 | 0.000 |
| 3 | PIG-05 | REF-01 | 0.531 | 0.010 |
| 4 | PIG-05 | REF-02 | 0.211 | 0.005 |
| 5 | PIG-01 | REF-01 | 0.420 | 0.000 |
| 6 | PIG-01 | REF-02 | 0.302 | 0.000 |
| 7 | PIG-02 | aliphatic | 0.523 | 0.010 |
| 8 | PIG-02 | aromatic | 0.284 | 0.000 |
| 9 | PIG-05 | aliphatic | 0.618 | 0.021 |
| 10 | PIG-05 | aromatic | 0.432 | 0.004 |

| | | | | |
|---|---|---|---|---|
| ∗Ms(0): initial saturation magnetization | | | | |

As seen from the comparatives 1 to 6, the conventional binders containing no tertiary amino group show worse corrosion resistance even with the provision of coated layers on the magnetic particles with silicon compound.

As seen from the comparatives 7 to 10, an excessive amount of coated layers made of Si compounds (an excessive content rate of Si contained in the coated layers to the overall compositions of the magnetic pigment) shows almost no improvement of corrosion resistance even with the provision of coated layers on the magnetic particles and employment of a binder containing the tertiary amino group.

On the contrary, the respective embodiments 1 to 4 employing a magnetic pigment having a moderate amount of coated layers made of Si compounds (a content rate of Si to the magnetic pigment is not more than 1.1 wt%) and employing a binder containing the tertiary amino group show a prominent improvement of corrosion resistance.

Content rate of Si to the magnetic pigment (PIG-05) for the comparatives 9 and 10 is 1.9 wt%, and that (PIG-03) for the embodiments 3 and 4 is 1.1 wt%.

From this fact, it is evident that there is a great difference in an effect of corrosion resistance between the content rate of Si of 1.1 wt% and that of 1.9 wt% and a large critical point therebetween.

At present, it is impossible to control the amount of the content rate of Si by a unit of 0.1 wt%. Accordingly, the content rate of Si to the overall compositions of the magnetic pigment is preferable to be not more than 1.1 wt% in the present invention.

Further, it is noted that the binder obtained from the aliphatic amine is more effective compared with that from the aromatic amine.

As mentioned in the foregoing, according to the first and second embodiments, it is possible to provide a magnetic recording medium having an excellent corrosion resistance without sacrificing the magnetic properties which the metal magnetic pigment inherently has.

Accordingly, it is possible to provide a magnetic recording medium having excellent preservability and capability of high density recording.

### [Third embodiment]

Next, the description is given of third embodiment of the magnetic recording mediums of the present invention.

The magnetic recording medium of the third embodiment generally comprises a substrate such as a base film and a magnetic layer formed on the substrate. The magnetic layer includes a magnetic pigment and a binder for binding the magnetic pigment.

In the improvement of the magnetic medium having a thickness of a magnetic layer of 0.1 to 0.3 µm, the inventors of the present invention studied hard to improve the corrosion resistance of a magnetic pigment by proving a corrosion resistance to a binder for binding the magnetic pigment, maintaining a saturation magnetization of the magnetic pigment to be 160 to 200 emu/g, which is required to perform a high density magnetic recording and can be obtained when a small amount of coated layers or no coated layer is employed.

As a result, they have developed a magnetic recording medium having an excellent corrosion resistance without sacrificing the excellent magnetic properties which the metal magnetic pigment inherently have, by introducing tertiary amino group represented by a formula (2) to a binder as mentioned hereinafter.

Specifically, the magnetic medium comprises a substrate and a magnetic layer having a thickness of 0.1 to 0.3 µm on the substrate, and the magnetic layer contains a ferromagnetic pigment of fine alloy particles mainly comprised of iron and a binder. The binder contains at least one of resins selected from a group of polyurethane and vinylchloride containing tertiary amino group represented by a formula (2) as a constitutional unit. 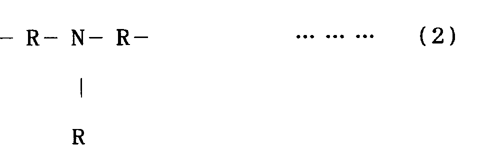 wherein R is one selected from a group consisting of hydrogen and hydrogen carbide group.

Thereby, the inventors have developed a magnetic medium having an excellent corrosion resistance without sacrificing the magnetic characteristics of the ferromagnetic pigment.

Especially, adsorption of N atoms of the tertiary amino shown in the formula (2) which are introduced to the binder, to the magnetic pigment is effective to improve the corrosion resistance of the ferromagnetic pigment.

In addition, it is preferable for the magnetic recording medium to have a saturation magnetic flux density Bm of 3500 to 5000 [G] and a coercive force Hc of 1800 to 2100 [Oe] in a medium running direction upon recording and reproducing the signals, for instance, in a longitudinal direction of a magnetic tape.

Inadequate saturation magnetic flux density Bm and inadequate coercive force Hc are apt to degrade a high density recording characteristic, and an excessive Hc is apt to degrade the overwrite characteristic. Excessive saturation magnetic flux density Bm is apt to reduce the dispersibility of the magnetic pigment.

It is preferable for the thickness of the magnetic layer to be 0.1 to 0.3 µm in a high density digital signal recording because an excessive thickness thereof degrades the overwrite characteristic and an inadequate thickness thereof reduces a reproducing output level.

Taking account of all the saturation magnetic density Bm, the coercive force Hc and the thickness of the magnetic layer, it is preferable for a saturation magnetization σs of the ferromagnetic pigment to be 160 to 200 emu/g.

Further, it is preferable for an average surface roughness SRa of the magnetic layer to be 2 to 5 nm. Excessive average surface roughness SRa is apt to reduce recording density characteristics of the medium due to a head-to-tape spacing loss, and an inadequate average surface roughness SRa is apt to degrade a medium running durability. Density (a weight ratio) of the tertiary amino group introduced in the binder to an amount of the binder resin is preferably to be 0.4 to 3.5 m mol/g in a polyurethane type resin and 0.1 to 2.0 m mol/g in a vinylchloride type resin, wherein the vinylchloride type resin represents, for instance, vinylchloride resin (vinylchloride copolymer) and vinylchloride vinylacetate copolymer.

Inadequate density of the tertiary amino group reduces an effect of the corrosion resistance, and a excessive density thereof is apt to degrade mechanical strength of the coated layer.

Next, the description is given of an embodiment wherein the tertiary amino group represented by the formula (2) is introduced into polyurethane resin.

Composition of a magnetic paint for forming the magnetic layer is shown as follows.

Composition of a magnetic paint

| | |
|---|---|
| • Magnetic pigment: | 100 weight parts |
| • Polyurethane resin: (one selected from a group of polyurethane resins shown in Table 7) | 10 weight parts |
| • Vinyl chloride resin (MR110 from Nippon Zeon) | 10 weight parts |
| • α-alumina: | 3 weight parts |
| • Coronate L: | 4 weight parts |
| • Palmitic acid | 2 weight parts |
| • Methyl ethyl ketone | 100 weight parts |
| • Cyclohexanone | 100 weight parts |

After kneading the mixture mentioned above, the respective magnetic paints were prepared for each of the embodiments and comparatives by mixing and dispersing the mixture by using a sand mill.

Characteristics of the magnetic pigments "A" and "B" used in the present invention are shown as follows:

| ⓞ Magnetic pigment A (Fe: 96 %, Ni: 1 %, Co: 3 %) | |
|---|---|
| • Saturation magnetization σs (emu/g): | 195 |
| • Coercive force (Oe): | 2000 |
| • Average long axis length (µm): | 0.11 |
| • Surface treatment: | none |

| ⓞ Magnetic pigment B (Fe: 88.8 %, Ni: 3 %, Co: 5 %, Si: 1.2 %, Al: 2.0 %) | |
|---|---|
| • Saturation magnetization σs (emu/g): | 130 |
| • Coercive force (Oe): | 1620 |
| • Average long axis length (µm): | 0.16 |
| • Surface treatment with inorganic compounds: | Al 2.0 wt % |
| | Si 1.2 wt % |

The wt % shown in the surface treatment with inorganic compounds denotes a content rate of Al or Si in a total amount of the magnetic pigment including such compound contained in the coated layers.

The polyurethane resins used in the magnetic paints are shown in Table 7.

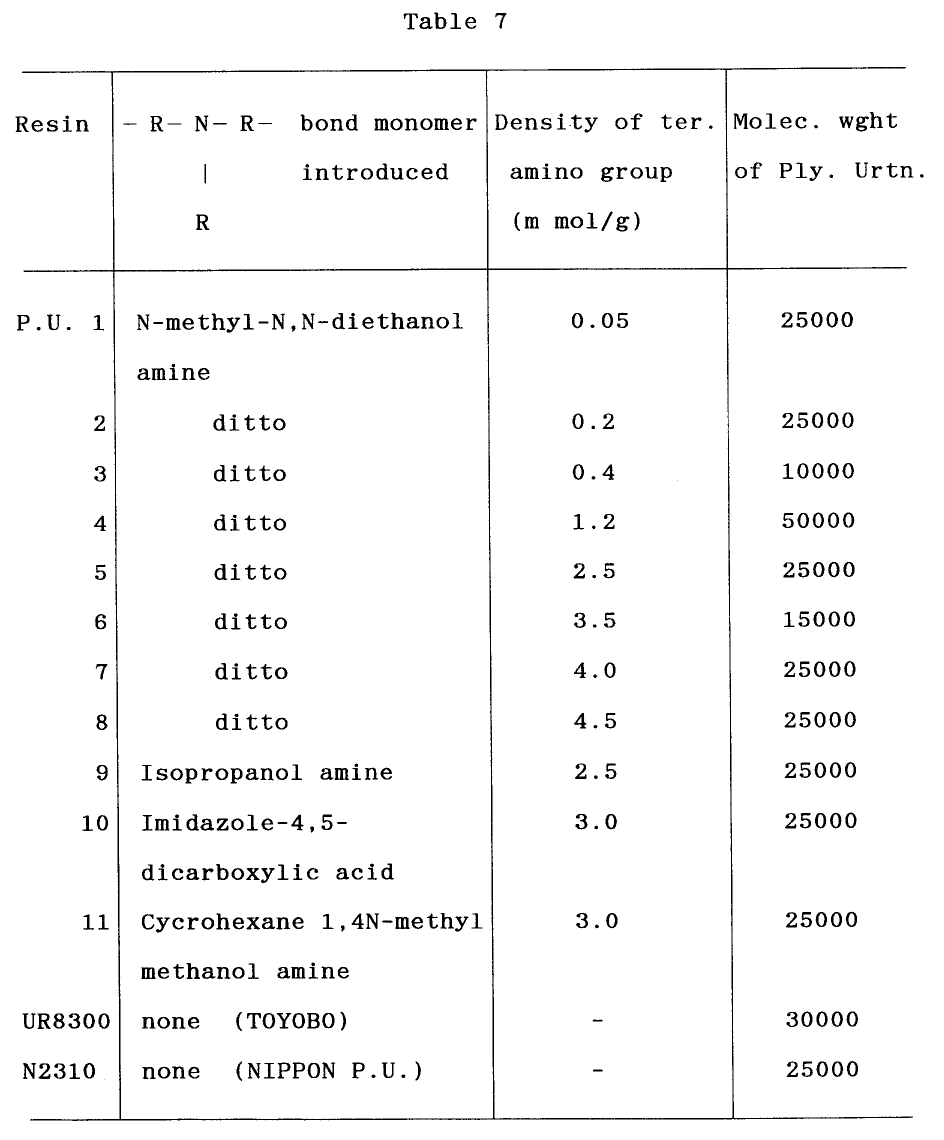

In a process of producing a magnetic tape by coating the magnetic paint having the above composition on one surface of the substrate, the thickness and the roughness of the magnetic layer of the magnetic tape were controlled by controlling a coating condition and a calenderring condition. In both the embodiments and comparatives, the thickness of the magnetic layer was made to be 0.12 µm, and the average surface roughness SRa thereof was made to be 2.0 to 3.0 nm.

Further, on another surface of the substrate, there was formed a back coat layer mainly composed of carbon black.

As the substrate, PET (polyethylene telephthalate) film having a thickness of 6.0 µm was employed. The thickness of the back coat layer was made to be 0.5 µm. The film magnetic medium was slit into a magnetic tape having a width of 3.81 mm for DAT (digital audio tape).

Magnetic tapes of embodiments 1 to 11 and comparatives 1 to 3 were prepared in the same manner as mentioned above. Combinations of the polyurethane resin (P.U) and the magnetic pigment (Mgntc. Pigmnt.) used in the magnetic tapes of the embodiments 1 to 11 and comparatives 1 to 3 are shown in Table 8.

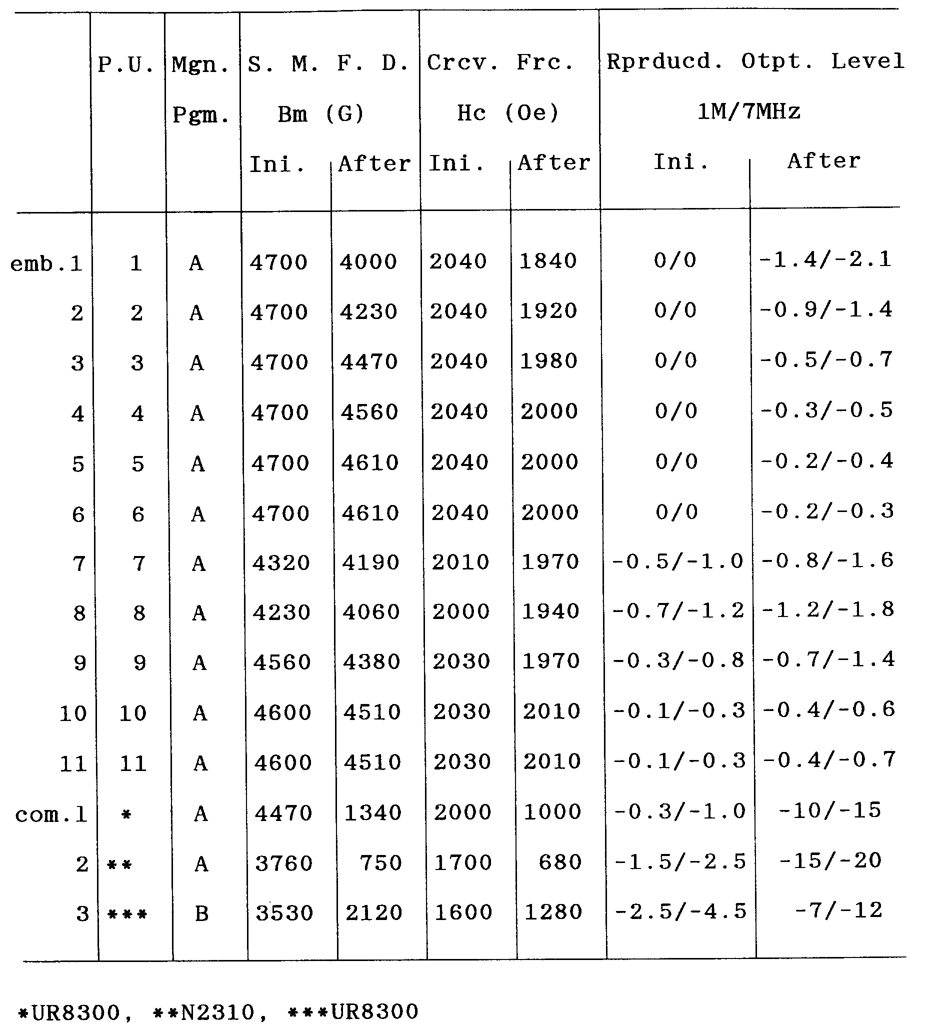

The evaluation of the respective magnetic tapes was performed by using a DAT deck (Model XD-Z505 of JVC). The deck was modified so as to evaluate the electromagnetic conversion characteristics. Specifically, the magnetic heads were replaced with ones having iron nitride magnetic cores having a high magnetic flux density Bs, and the head amplifier section was modified so as to directly input signals from outside so as to measure levels of input and output signals directly. Reproduced outputs were measured by recording respective sinusoidal wave signals of 1 MHz and 7 MHz on the magnetic tape and reproducing the recorded signals therefrom. The evaluation of stability (corrosion resistance) was performed with respect to saturation magnetic flux density (S. M. F. D) Bm, coercive force (Crcv. Frc.) Hc and reproducing output level (Rprdcd. Otpt. Level) by comparing an initial value with a value after a conservation durability test for ten days under a condition of temperature of 60 °C and humidity of 90 %.

The results of the evaluation test are shown in Table 8.

As seen from Table 8, the comparatives 1 to 3 which employ polyurethane containing no tertiary amino group as the binder, show larger decrement values in the saturation magnetic flux density Bm, the coercive force Hc and the reproducing output level after the preservation durability test. The comparative 3 shows a smaller decrement value compared with those of the comparatives 1 and 2 because it employs the magnetic pigment B surface-treated with inorganic compounds, however, a larger decrement value compared with those of embodiments 1 to 11.

On the contrary, the embodiments 1 to 11 which employ polyurethane containing amino group as the binder, show smaller decrement values in the saturation magnetic flux density Bm, the coercive force Hc and the reproducing output level after the preservation durability test compared with those of comparatives 1 to 3, though they employ the magnetic pigment A which is not surface-treated with inorganic compounds. A reason of this result is considered that the polyurethane containing tertiary amino group are possible to provide adequately corrosion resistance. It is proper that the embodiments 1 to 11 also show excellent initial values.

If examined in detail about the respective embodiments, the embodiments 1 and 2 which employ polyurethane resins containing a tertiary amino group density of less than 0.4 m mol/g, show larger decrement values in the reproducing output levels after the conservation test compared with those of the embodiments 3 to 6 and 9 to 11 (but much smaller decrement values compared with those of the comparatives). The embodiments 7 and 8 of which the tertiary amino group density is larger than 3.5 m mol/g, show smaller initial values in the saturation magnetic flux density Bm, the coercive force Hc and the reproducing output levels, compared with those of the embodiments 3 to 6 and 9 to 11. Further, the embodiments 7 and 8 show larger decrement values in the reproducing output levels after the preservation test compared with those of the embodiments 3 to 6 and 9 to 11. Accordingly, the tertiary amino group density to the polyurethane is more preferably to be 0.4 to 3.5 m mol/g.

Next, the description is given of an embodiment wherein the tertiary amino group represented by the formula (2) is introduced into vinyl chloride resin.

Compositions of the magnetic paint for forming the magnetic layer are the same as those mentioned in the foregoing except for replacing [a ployurethane selected from a group of polyurethane shown in Table 7] with [a vinyl chloride selected from a group of vinyl chloride shown in Table 9] and replacing [vinyl chloride resin (MR110 from NIPPON ZEON)] with [UR8300 from TOYOBO]. Further, the magnetic pigments used, the producing method of magnetic tape, the evaluation method of the magnetic tapes are the same as those mentioned in the foregoing.

There are shown vinyl chloride which is used, in Table 9. There are shown in Table 11 the combinations of vinyl chloride and magnetic pigments used in the respective embodiments and comparatives, and the evaluation results thereof. (It is noted that the reference numbers of the embodiments and the comparatives used in Table 10 are not related to those shown in Table 8.)

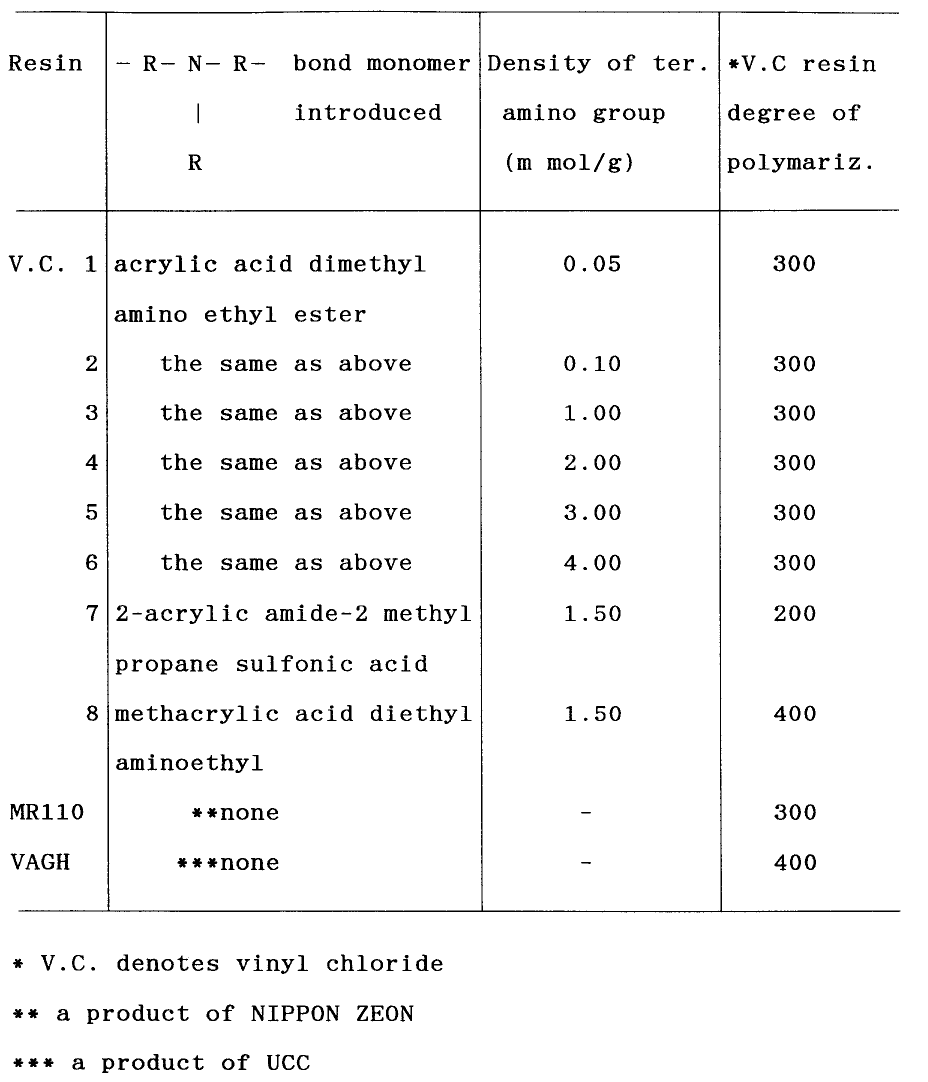

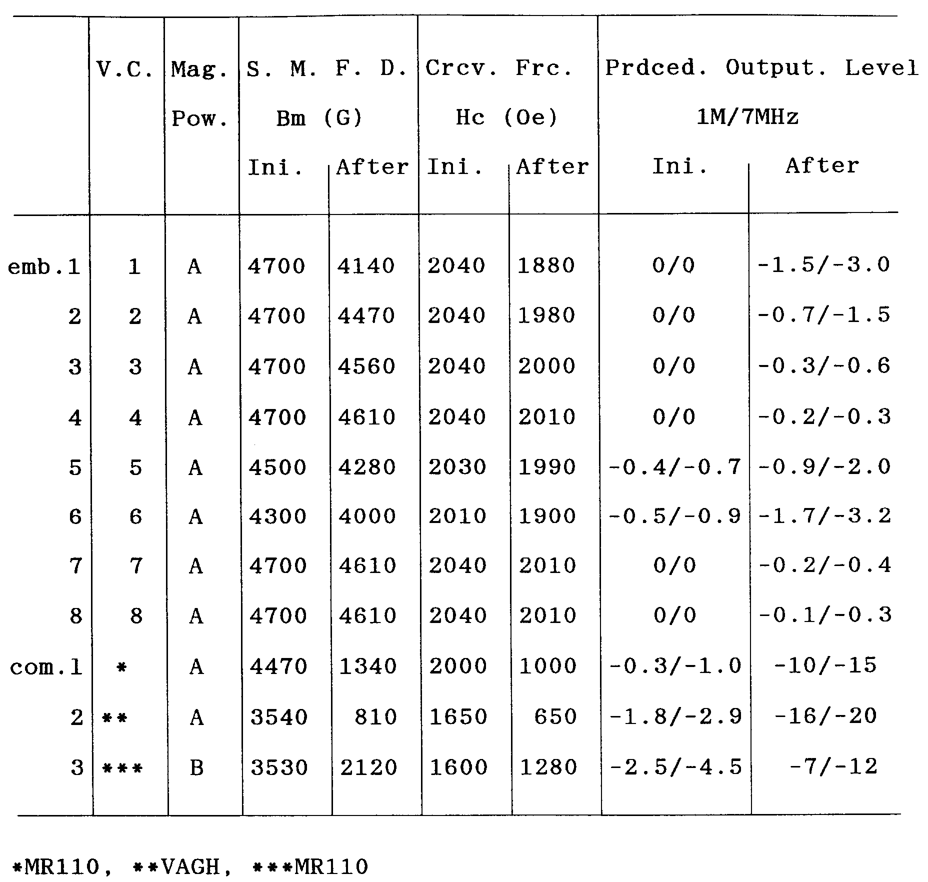

As seen from Table 10, the comparatives 1 to 3 which employ vinyl chloride containing no tertiary amino group as the binder, show larger decrement values in the saturation magnetic flux density Bm, the coercive force Hc and the reproducing output level after the preservation durability test. The comparative 3 shows a smaller decrement value compared with those of the comparatives 1 and 2 because it employs the magnetic pigment B surface-treated with inorganic compounds, however, it shows a larger decrement value compared with those of embodiments 1 to 8.

On the contrary, the embodiments 1 to 8 which employ vinyl chloride containing amino group as the binder, show smaller decrement values in the saturation magnetic flux density Bm, the coercive force Hc and the reproduced output level after the preservation durability test compared with those of comparatives 1 to 3, though they employ the magnetic pigment A which is not surface-treated with inorganic compounds. A reason of this result is considered that the vinyl chloride containing tertiary amino group is possible to provide adequately corrosion resistance. It is proper that the embodiments 1 to 8 also show excellent initial values.

If examined in detail about the respective embodiments, the embodiment 1 which employs vinyl chloride resin containing a tertiary amino group density of less than 0.1 m mol/g, shows larger decrement values in the reproducing output levels after the preservation test compared with those of the embodiments 2 to 4 and 7 to 8 (but much smaller decrement values compared with those of the comparatives). The embodiments 5 and 6 of which the tertiary amino group density is larger than 2.0 m mol/g, show smaller initial values in the saturation magnetic flux density Bm, the coercive force Hc and the reproducing output levels compared with those of the embodiments 2 to 4 and 7 to 8. Further, the embodiments 5 and 6 show larger decrement values in the reproducing output levels after the preservation test compared with those of the embodiments 2 to 4 and 7 to 8. Accordingly, the tertiary amino group density to the vinyl chloride is more preferable to be 0.1 to 2.0 m mol/g.

As mentioned above, it is possible to greatly improve the corrosion resistance without sacrificing the excellent magnetic properties which the metal magnetic pigment inherently has, by introducing the tertiary amino group to vinyl chloride resin and polyurethane resin.

In the above embodiments, there is employed either vinyl chloride containing the tertiary amino group or polyurethane containing thereof, however, it is possible to employ both of them. Further, it is possible to employ magnetic pigments surface-treated with inorganic compounds to an extent to obtain an amount of a predetermined saturation magnetisation. These two methods allow to improve the corrosion resistance as much as those of the embodiments or more than that in a certain case.

According to the magnetic recording medium of the present invention, it is possible to greatly improve the corrosion resistance without sacrificing the excellent magnetic properties which the metal magnetic pigment inherently has. Accordingly, it is possible to provide high density recording type magnetic recording mediums having excellent preservability for a prolonged time.

## Claims

1. A magnetic recording medium having a substrate and a magnetic layer on the substrate, the magnetic layer containing a ferromagnetic pigment of fine iron particle or fine alloy particles mainly comprised of iron, and a binder, the magnetic medium comprising:
the ferromagnetic pigment having an average long axis length of not more than 100 nm and a value of BET of not less than 50 m²/g and a magnetization of not less than 120 emu/g; and
the binder made of a resin containing tertiary amino group represented by a formula (1) as a constitutional unit, 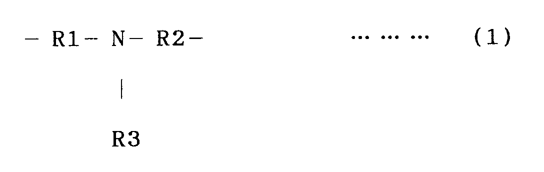
wherein R1, R2 and R3 are selected from groups of:
(a) saturated aliphatics and derivatives thereof,
(b) unsaturated aliphatics and derivatives thereof,
(c)C3-C7 saturated cyclic compounds and derivatives thereof,
(d) C3-C7 unsaturated cyclic compounds and derivatives thereof, and
(e) aromatics and derivatives thereof.

2. A magnetic recording medium as claimed in claim 1, wherein the saturated aliphatics having straight chains.

3. A magnetic recording medium as claimed in claim 1, wherein the unsaturated aliphatics having straight chains.

4. A magnetic recording medium as claimed in claim 1, wherein the saturated aliphatics having branchings.

5. A magnetic recording medium as claimed in claim 1, wherein the unsaturated aliphatics having branchings.

6. A magnetic recording medium having a substrate and a magnetic layer on the substrate, the magnetic layer containing a ferromagnetic pigment of fine iron particle or fine alloy particles mainly comprised of iron, and a binder, the magnetic medium comprising:
the ferromagnetic pigment being surface-treated by inorganic compounds and containing Si of a content rate of not more than 1.1 weight % to a total amount of the magnetic pigment; and
the binder made of a resin containing tertiary amino group represented by a formula (1) as a constitutional unit, 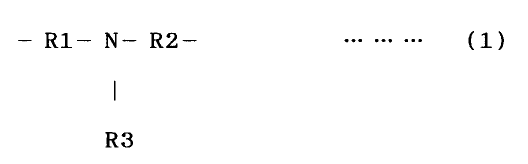
wherein R1, R2 and R3 are selected from groups of:
(a) saturated aliphatics and derivatives thereof,
(b) unsaturated aliphatics and derivatives thereof,
(c) C3-C7 saturated cyclic compounds and derivatives thereof,
(d) C3-C7 unsaturated cyclic compounds and derivatives thereof, and
(e) aromatics and derivatives thereof.

7. A magnetic recording medium as claimed in claim 6, wherein the saturated aliphatics having straight chains.

8. A magnetic recording medium as claimed in claim 6, wherein the unsaturated aliphatics having straight chains.

9. A magnetic recording medium as claimed in claim 6, wherein the saturated aliphatics having branchings.

10. A magnetic recording medium as claimed in claim 6, wherein the unsaturated aliphatics having branchings.

11. A magnetic recording medium having a substrate and a magnetic layer on the substrate, the magnetic layer containing a ferromagnetic pigment of fine iron particle or fine alloy particles mainly comprised of iron, and a binder, the ferromagnetic pigment having a saturation magnetization σs of 160 to 200 emu/g, the magnetic layer having a thickness of 0.1 to 0.3 µm, wherein the binder is made of polyurethane resin containing tertiary amino group represented by a formula (2) as a constitutional unit, 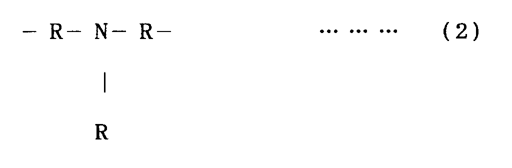 wherein R is one selected from a group of hydrogen and hydrogen carbide group.

12. A magnetic recording medium as claimed in claim 11, wherein the polyurethane resin contains the tertiary amino group of 0.4 to 3.5 m mol/g.

13. A magnetic recording medium having a substrate and a magnetic layer on the substrate, the magnetic layer containing a ferromagnetic pigment of fine iron particles or fine alloy particles mainly comprised of iron, and a binder, the ferromagnetic pigment having a saturation magnetization σs of 160 to 200 emu/g, the magnetic layer having a thickness of 0.1 to 0.3 µm, wherein the binder is made of vinyl chloride type resin containing tertiary amino group represented by a formula (2) as a constitutional unit, 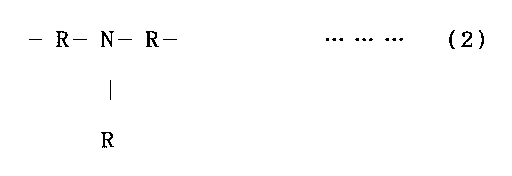 wherein R is one selected from a group of hydrogen and hydrogen carbide group.

14. A magnetic recording medium as claimed in claim 13, wherein the vinyl chloride type resin contains the tertiary amino group of 0.1 to 2.0 m mol/g.

15. A magnetic recording medium having a substrate and a magnetic layer on the substrate, the magnetic layer containing a ferromagnetic pigment of fine iron particles or fine alloy particles mainly comprised of iron, and a binder, the ferromagnetic pigment having a saturation magnetization σs of 160 to 200 emu/g, the magnetic layer having a thickness of 0.1 to 0.3 µm, wherein the binder is made of both vinyl chloride type resin and polyurethane resin each containing tertiary amino group represented by a formula (2) as a constitutional unit, 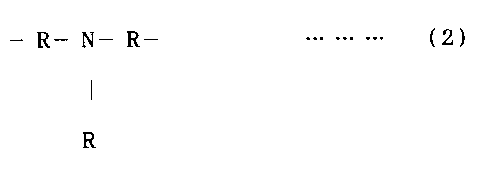 wherein R is one selected from a group of hydrogen and hydrogen carbide group.
